(19) Europäisches Patentamt
European Patent Office
Office européen des brevets

(11) **EP 4 358 070 B1**

(12) **EUROPEAN PATENT SPECIFICATION**

(45) Date of publication and mention
of the grant of the patent:
**25.03.2026 Bulletin 2026/13**

(21) Application number: **21945917.9**

(22) Date of filing: **14.06.2021**

(51) International Patent Classification (IPC):
*G06F 7/544* (2006.01)     *H04L 9/08* (2006.01)

(52) Cooperative Patent Classification (CPC):
**H04L 9/085; G06F 7/544**

(86) International application number:
**PCT/JP2021/022586**

(87) International publication number:
**WO 2022/264237 (22.12.2022 Gazette 2022/51)**

(54) **CUMULATIVE CALCULATION DEVICE, CUMULATIVE CALCULATION METHOD, AND PROGRAM**

KUMULATIVE BERECHNUNGSVORRICHTUNG, KUMULATIVES BERECHNUNGSVERFAHREN UND PROGRAMM

DISPOSITIF DE CALCUL CUMULATIF, PROCÉDÉ DE CALCUL CUMULATIF ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.04.2024 Bulletin 2024/17**

(73) Proprietor: **NTT, Inc.**
**Tokyo 100-8116 (JP)**

(72) Inventor: **HAMADA, Koki**
**Musashino-shi, Tokyo 180-8585 (JP)**

(74) Representative: **Murgitroyd & Company**
**165-169 Scotland Street**
**Glasgow G5 8PL (GB)**

(56) References cited:
**EP-A1- 3 806 070       WO-A1-2019/208484**
**WO-A1-2019/208485     WO-A1-2019/208486**
**WO-A1-2019/225401     JP-A- 2014 081 475**

• **GRAHAM SUSAN L ET AL: "Simple, efficient, asynchronous parallel algorithms for maximization", ACM TRANSACTIONS ON PROGRAMMING LANGUAGE AND SYSTEMS, ACM, NEW YORK, NY, vol. 10, no. 2, 1 April 1988 (1988-04-01), pages 313 - 337, XP059524804, ISSN: 0164-0925, DOI: 10.1145/42190.42278**

**Description**

[Technical Field]

The present invention relates to a cumulative calculation device, a cumulative calculation method, and a program.

[Background Art]

As a method of obtaining a specific calculation result without restoring an encrypted numerical value, a method called secret calculation is known from the related art. For example, NPL 1 discloses a three-party secret sharing technique.

A technique for totalizing grouped data is known as one of the data processing techniques in the related art. For example, NPL 2 discloses a method of calculating statistical values (an average value, a maximum value, totalization, and the like) of grouped data for each group through secret calculation. Note that these statistical values are implemented by cumulating associative binary operations.

[Citation List]

EP 3806070 A1 is prior art.

[Non Patent Literature]

[NPL 1] Koji Chida, Koki Hamada, Dai Ikarashi, and Katsumi Takahashi, "Reconsideration of Lightweight Verifiable Three-Party Secret Function Calculation", In CSS, 2010.
[NPL 2] Dai Ikarashi, Koji Chida, Koki Hamada, and Katsumi Takahashi, Efficiency of Lightweight Verifiable Three-Party Secret Function Computation and Secure Database Processing Using the Same. In SCIS, pp. 1 to 8, 2011

[Summary of Invention]

[Technical Problem]

However, the conventional method is designed exclusively to perform calculation of statistical values for an individual group (that is, calculation of accumulation of binary arithmetic operations) while concealing the group for secret calculation, and the efficiency is low because the accumulation calculation method used in normal data processing, which is not secret calculation, cannot be used as it is for secret calculation.

An embodiment of the present invention has been made in view of the foregoing points, and an object of the present invention is to perform cumulative calculation for an individual group efficiently.

[Solution to Problem]

In order to achieve the foregoing object, a cumulative calculation device according to an embodiment is a cumulative calculation device that, with respect to a column $v=(v_1, ..., v_n)$ of n values divided into groups, calculates cumulation for each of the groups through an associative binary operation. The cumulative calculation device includes: a value conversion unit configured to convert v into $v'=(v_1', ...., v_n')$ (where $v_i' = (v_i, c_i)$) when $c=(c_1, ..., c_n)$ is a column of values in which 1 corresponds to a head element of the group and 0 corresponds to elements other than the head element among elements $v_1, ..., v_n$ of v; a binary operation generation unit configured to generate a new binary operation for calculating a new pair (p, q) for two pairs (w, x) and (y, z) (where $x, z \in \{0, 1\}$) using the binary operation; a cumulative calculation unit configured to calculate cumulation $s_i'$ (where $s_i'$ is cumulation from $v_1'$ to $v_i'$ through the new binary operation) through the new binary operation for i=1, ..., n; and an output unit configured to extract a column $u=(u_1, ..., u_n)$ of values indicating the cumulation for said each of the groups from each $s_i'$ (where i=1, ..., n) and output the extracted u. The new binary operation sets an operation result of w and y by the binary operation to p when z=0, sets y to p when z=1, and sets a logical sum of x and z to q.

[Advantageous Effects of Invention]

It is possible to perform the cumulative calculation for each group efficiently.

[Brief Description of Drawings]

[Fig. 1]

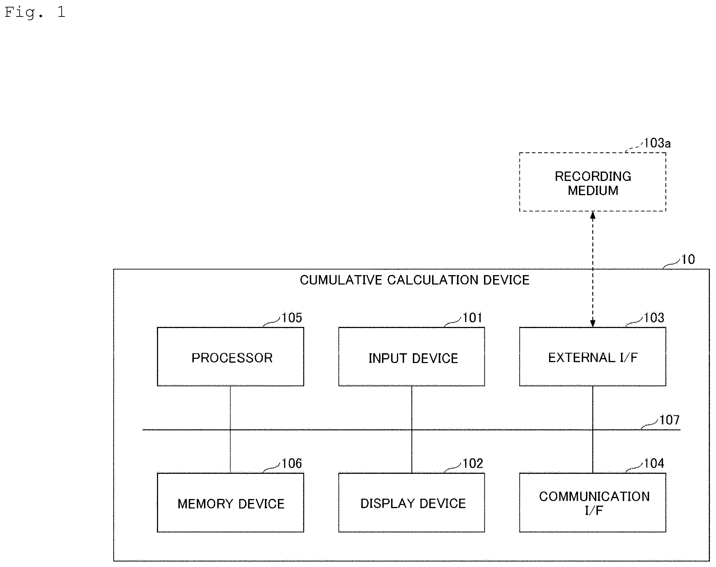

Fig. 1 is a diagram illustrating an example of a hardware configuration of a cumulative calculation device according to an embodiment.
[Fig. 2]

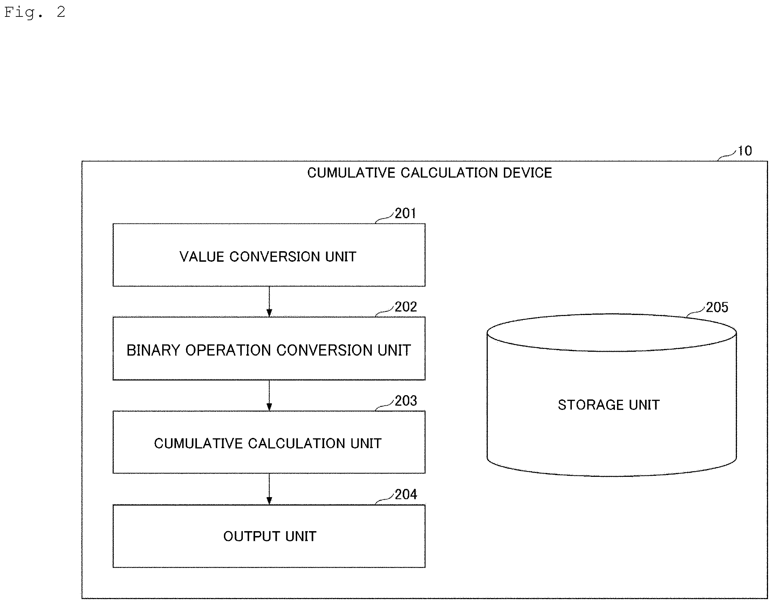

Fig. 2 is a diagram illustrating an example of a functional configuration of the cumulative calculation device according to the embodiment.
[Fig. 3]

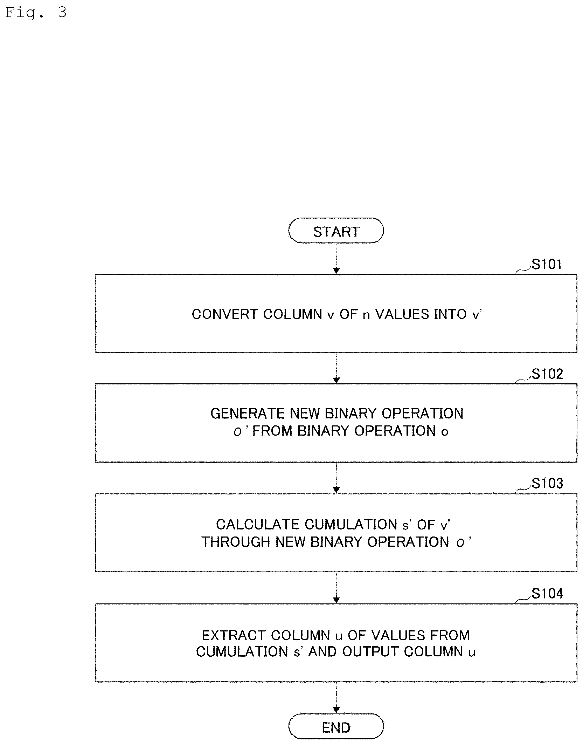

Fig. 3 is a flowchart illustrating an example of a flow of cumulative calculation processing according to the embodiment.

[Description of Embodiments]

Hereinafter, an embodiment of the present invention will be described. In the embodiment, a cumulative calculation device 10 capable of performing cumulative calculation for each group efficiently will be described.

Here, a column of n values is denoted as $v=(v_1, ..., v_n)$, and each element $v_i$ (where i=1, ..., n) of v is divided into several groups. It is assumed that elements in the same group are arranged to have consecutive indexes (element numbers).

For example, when the column is divided into three groups, there are certain i' and i" (where $1 \leq i' < i'' < n$), $v_1$ to $v_{i'}'$ form a first group, $v_{i'+1}$ to $v_{i''}$ form a second group, and $v_{i''+1}$ to $v_n$ form a third group.

[Math. 1]

$$\circ$$

The above expression is assumed to be a binary operation.

At this time, when the cumulative calculation is performed by the binary operation in each group, the cumulative calculation device 10 according to the present embodiment generates a new binary operation in which cumulation for each group can be calculated by the foregoing binary operation by cumulative calculation on the entire data (that is, all n values $v_1', ..., v_n'$ to be described later) and calculates cumulation of the entire data by the new binary operation. Since the cumulative calculation of the entire data is used in normal data processing, the cumulative calculation device 10 according to the present embodiment can perform the calculation efficiently, for example, even when the cumulative calculation for each group is performed by secret calculation.

<Hardware Configuration of Cumulative Calculation Device 10>

Fig. 1 illustrates a hardware configuration of the cumulative calculation device 10 according to the embodiment. As illustrated in Fig. 1, the cumulative calculation device 10 according to the embodiment is implemented with a hardware configuration of a general computer or a computer system, and includes an input device 101, a display device 102, an external I/F 103, a communication I/F 104, a processor 105, and a memory device 106. These hardware components are connected to be capable of communicating with each other via a bus 107.

The input device 101 is, for example, a keyboard, a mouse, a touch panel, various physical buttons, or the like. The display device 102 is, for example, a display or the like. Note that the cumulative calculation device 10 may not include, for example, at least one of the input device 101 and the display device 102.

The external I/F 103 is an interface with an external device such as the recording medium 103a. The cumulative calculation device 10 can perform reading or writing of the recording medium 103a via the external I/F 103. Note that examples of the recording medium 103a include a compact disc (CD), a digital versatile disk (DVD), a secure digital memory card (SD memory card), and a Universal Serial Bus (USB) memory card.

The communication I/F 104 is an interface that connects the cumulative calculation device 10 to a communication network. The processor 105 is, for example, any of various calculation devices such as a central processing unit (CPU) and a graphics processing unit (GPU). The memory device 106 is, for example, any of various storage devices such as a hard disk drive (HDD), a solid-state drive (SSD), a flash memory, a random access memory (RAM), and a read-only memory (ROM).

The cumulative calculation device 10 according to the embodiment has the hardware configuration illustrated in Fig. 1, and thus is capable of implementing various types of processing to be described below. Note that the hardware configuration illustrated in Fig. 1 is exemplary, and the cumulative calculation device 10 may include, for example, a plurality of processors 105 or may include a plurality of memory devices 106. The cumulative calculation device 10 may have various types of hardware components other than the illustrated hardware components.

<Functional Configuration of Cumulative Calculation Device 10>

Fig. 2 illustrates a functional configuration of the cumulative calculation device 10 according to the embodiment. As shown in Fig. 2, the cumulative calculation device 10 according to the embodiment includes a value conversion unit 201, a binary operation generation unit 202, a cumulative calculation unit 203, an output unit 204, and a storage unit 205. The value conversion unit 201, the binary operation generation unit 202, the cumulative calculation unit 203, and the output unit 204 are implemented by, for example, processing which the processor 105 is caused to execute by one or more programs installed on the cumulative calculation device 10. The storage unit 205 is implemented by, for example, the memory device 106. Note that the storage unit 205 may be implemented by, for example, a storage device or the like connected to the cumulative calculation device 10 via a communication network.

The value conversion unit 201 converts v into $v'=(v_1', ...., v_n')$ (where $v_i'=(v_i, c_i)$) when $c=(c_1, ..., c_n)$ is a column of values in which 1 corresponds to the head element of a group and 0 corresponds to elements other than the head element among elements $v_1, ..., v_n$ of v.

The binary operation generation unit 202 generates a new binary operation capable of calculating cumulation for each group through an original binary operation by cumulative calculation on the entire data.

The cumulative calculation unit 203 performs cumulative calculation by the new binary operation on all $v'=(v_1', ..., v_n')$.

The output unit 204 extracts a result of the cumulative calculation for each group by the original binary operation from the result of the cumulative calculation by the new binary operation and outputs the extracted result.

The storage unit 205 stores a column $v=(v_1, ..., v_n)$ of n values as cumulative calculation targets, intermediate results of the cumulative calculation, a cumulative calculation result, and the like.

<Flow of Cumulative Calculation Processing>

A flow of the cumulative calculation processing according to the embodiment will be described with reference to Fig. 3.

First, the value conversion unit 201 converts a column of values in which 1 corresponds to the head element in a group and 0 corresponds to other elements among elements of v into $c=(c_1, ..., c_n)$, and converts v into $v'=(v_1', ..., v_n')$ (where $v_i'=(v_i, c_i)$ (step S101)).

Subsequently, the binary operation generation unit 202 generates a new binary operation denoted as follows that is capable of calculating cumulation for each group by the original binary operation by cumulative calculation on the entire data (that is, all n values $v_1', ..., v_n'$).

[Math. 2]

$$ \circ' $$

The binary operation is defined as follows (step S102).

[Math. 3]

$$(w, x) \circ' (y, z) = (zy + (1 - z)(w \circ y), x \mathrm{OR} z)$$

where w and y are variables which can have any values, x and z are variables which can have values of 0 or 1, and OR is an operator which is 1 when at least one of x and z is 1 and 0 otherwise (that is, an operator indicating a logical sum).

Subsequently, the cumulative calculation unit 203 calculates cumulation by the new binary operation on all $v'=(v_1', ..., v_n')$ (step S103). That is, the cumulative calculation unit 203 calculates the cumulation $s'=(s_1', ..., s_n')$ of $v'$ by the new binary operation. Here, for i=1, ..., n, the following cumulation is obtained.

[Math. 4]

$$s_i' = v_1' \circ' v_2' \circ' \ldots \circ' v_i'$$

Then, with setting each $s_i'$ as $s_i'= (u_i, d_i)$, the output unit 204 extracts a column $u=(u_1, ..., u_n)$ of the values, and outputs the column u as a cumulative result of the original binary operation (step S104). At this time, each $u_i$ is the result of the cumulative calculation of $v_1, ..., v_i$ by the original binary operation. For each i=1, ..., n, $d_i=1$.

Note that although the output destination for the output unit 204 may be set discretionarily, for example, the output may be stored in the storage unit 205, or may be transmitted to another device or apparatus, or the like can be considered.

<Examples>

Hereinafter, examples of the foregoing cumulative calculation processing will be described.

<<Example 1>>

In this example, a case will be described in which a column $v=(3, 5, 1, 2, 4, 6, 1, 3, 2, 8)$ of values that is divided into four groups of four, two, one, and three elements from the head is given, and cumulative calculation for each group is performed through a binary operation max(x, y).

Note that max(x, y) is a binary operation of outputting the maximum values of x and y.

First, in the foregoing step S101, a column $c=(1, 0, 0, 0, 1, 0, 1, 1, 0, 0)$ of values in which 1 corresponds to the head element of the group and 0 corresponds to the other elements is generated, and v is converted into the following v'.

$v'= ((v_1, c_1), ..., (v_{10}, c_{10}))=((3, 1),(5, 0), (1, 0), (2, 0), (4, 1), (6, 0) (1, 1), (3, 1), (2, 0), (8, 0))$

In the foregoing step S102, a new binary operation defined by the foregoing Math. 3 is generated. In the foregoing step S103, cumulation is calculated on all $v'=((v_1, c_d, ..., (v_{10}, c_{10}))$ by the new binary operation.

For example,

[Math. 5]

$$s_1' \circ' s_2' \circ' \ldots \circ' s_{10}'$$

By using a cumulative calculation method of calculating the above expression in order from the left, $s'=(s_1', ..., s_{10}')$ can be calculated as follows.

[Math 6]

$$s'_1 = (3, 1)$$
$$s'_2 = s'_1 \circ' (5, 0) = (5, 1)$$
$$s'_3 = s'_2 \circ' (1, 0) = (5, 1)$$
$$s'_4 = s'_3 \circ' (2, 0) = (5, 1)$$
$$s'_5 = s'_4 \circ' (4, 1) = (4, 1)$$
$$s'_6 = s'_5 \circ' (6, 0) = (6, 1)$$
$$s'_7 = s'_6 \circ' (1, 1) = (1, 1)$$
$$s'_8 = s'_7 \circ' (3, 1) = (3, 1)$$
$$s'_9 = s'_8 \circ' (2, 0) = (3, 1)$$
$$s'_{10} = s'_9 \circ' (8, 0) = (8, 1)$$

Accordingly, in the foregoing step S104, u=(3, 5, 5, 5, 4, 6, 1, 3, 3, 8) is extracted and output. From this u, it can be understood that the cumulative calculation for each group by the original binary operation max(x, y) (that is, the calculation of a maximum value of the cumulation until each element in the group) is performed.

<<Example 2>>

In the foregoing Example 1, $s_1'$, ..., $s_{10}'$ are calculated in order from the left by the new binary operation in step S103. However, instead, $s_1'$, ..., $s_{10}'$ are calculated in parallel in this embodiment. Accordingly, it is possible to execute cumulative calculation more efficiently than in Example 1. Note that it has been known that an associative binary operation can be calculated in parallel.

<Conclusion>

As described above, the cumulative calculation device 10 according to the present embodiment assigns flags in which a head element of a group is 1 and other elements are 0 to values to be cumulated when cumulative calculation is executed by the binary operation in each group, defines a new binary operation, and performs cumulative calculation on the entire data (that is, all the pairs of values and flags) by the new binary operation. This new binary operation uses the fact that the value of cumulation has already been calculated for the head element of a group to regard the flag as indicating whether the calculation has been done, and thereby, is an extension of the original binary operation to a binary operation for the pairs of values and flags.

Accordingly, the cumulative calculation device 10 according to the embodiment can perform secret calculation efficiently even when cumulative calculation is performed for each group by, for example, secret calculation (including secret sharing). This is because by using any method of applying binary operations with which the cumulative calculation is desired in a determined order, the cumulative calculation for each group can be performed by secret calculation in the same order. Therefore, for example, by using max or min as the binary operation, a group by max or a group by min s or the like in the secret calculation can be efficiently implemented.

Accordingly, the cumulative calculation device 10 according to the embodiment is not only used for normal data processing but is also applicable to, for example, a case where data processing and data analysis are performed while keeping data contents secret. As a specific example, the cumulative calculation device 10 according to the embodiment can generate training data of a machine learning model that implements a predetermined task (for example, certain prediction, classification, or the like) while keeping data contents secret. In addition, the cumulative calculation device 10 according to the embodiment may be able to perform various predictions and classifications by a machine learning model learned by the training data, and also control another device, apparatus, system, and the like based on results of the predictions or classifications.

The present invention is not limited to the specifically disclosed embodiments, and various modifications, changes, combinations with known techniques, and the like can be made.

[Reference Signs List]

10       Cumulative calculation device
101     Input device
102     Display device
103     External I/F
103a    Recording medium
104     Communication I/F
105     Processor
106     Memory device
107     Bus
20       Value Conversion unit
202     Binary operation generation unit
203     Cumulative calculation unit
204     Output unit
205     Storage unit

**Claims**

1. A cumulative calculation device that, with respect to a column $v=(v_1, ..., v_n)$ of n values divided into groups wherein elements in each group are arranged to have consecutive indexes, calculates cumulation for each of the groups through an associative binary operation, the cumulative calculation device being **characterised by** comprising:

   a value conversion unit configured to, by forming $c=(c_1, ..., c_n)$ as a column of values in which 1 corresponds to a head element of a group and 0 corresponds to elements other than the head element among elements $v_1, ..., v_n$ of v, convert v into $v'=(v_1', ...., v_n')$, where $v_i'=(v_i, c_i)$;
   a binary operation generation unit configured to generate a new binary operation for calculating a new pair (p, q) for two pairs (w, x) and (y, z), where $x, z \in \{0, 1\}$, using the binary operation;
   a cumulative calculation unit configured to calculate cumulation $s_i'$, where $s_i'$ is cumulation from $v_1'$ to $v_i'$, by the new binary operation for i=1, ..., n for each group; and
   an output unit configured to extract a column $u=(u_1, ..., u_n)$ of values indicating the cumulation for said each of the groups from each $s_i'$, where i=1, ..., n, and output the extracted u,
   wherein the new binary operation sets p to an operation result of w and y by the binary operation when z=0, sets p to y when z=1, and sets q to a logical sum of x and z; and
   wherein the output unit extracts $u=(u_1, ..., u_n)$ as $s_i' = (u_i, d_i)$.

2. The cumulative calculation device according to claim 1, wherein the binary operation generation unit generates the new binary operation by defining an operational result of (w, x) and (y, z) by the new binary operation as $(zy+(1-z)r, x\text{OR}z)$, where r is an operational result of w and y by the binary operation, and OR is an operator indicating the logical sum.

3. A cumulative calculation method performed by a cumulative calculation device that, with respect to a column $v=(v_1, ..., v_n)$ of n values divided into groups wherein elements in each group are arranged to have consecutive indexes, calculates cumulation for each of the groups through an associative binary operation, the method being **characterised by** comprising:

   a value conversion procedure of converting v into $v'=(v_1', ...., v_n')$, where $v_i'=(v_i, c_i)$, when $c=(c_1, ..., c_n)$ is a column of values in which 1 corresponds to a head element of the group and 0 corresponds to elements other than the head element among elements $v_1, ..., v_n$ of v;
   a binary operation generation procedure of generating a new binary operation for calculating a new pair (p, q) for two pairs (w, x) and (y, z), where $x, z \in \{0, 1\}$, using the binary operation;
   a cumulative calculation procedure of calculating a cumulative $s_i'$, where $s_i'$ is cumulation from $v_1'$ to $v_i'$, by the new binary operation for i=1, ..., n for each group; and
   an output procedure of extracting a column $u=(u_1, ..., u_n)$ of values indicating the cumulation for said each of the groups from each $s_i'$, where i=1, ..., n, and outputting the extracted u,

wherein the new binary operation sets p to an operation result of w and y by the binary operation when z=0, sets p to y when z=1, and sets q to a logical sum of x and z; and

wherein the output unit extracts u= ($u_1$, ..., $u_n$) as $s_i$' = ($u_i$, $d_i$).

4. A program causing a computer to function as the cumulative calculation device according to claim 1 or 2.

**Patentansprüche**

1. Eine kumulative Berechnungsvorrichtung, die in Bezug auf eine Spalte v = ($v_1$, ..., $v_n$) von n Werten, die in Gruppen unterteilt sind, wobei Elemente in jeder Gruppe so angeordnet sind, dass sie aufeinanderfolgende Indizes aufweisen, eine Kumulation für jede der Gruppen durch eine assoziative Binäroperation berechnet, wobei die kumulative Berechnungsvorrichtung **dadurch gekennzeichnet ist, dass** sie Folgendes beinhaltet:

eine Wertumwandlungseinheit, die konfiguriert ist, um durch Bilden von c = ($c_1$, ..., $c_n$) als eine Spalte von Werten, in der 1 einem Kopfelement einer Gruppe entspricht und 0 anderen Elementen als dem Kopfelement unter den Elementen $v_1$, ..., $v_n$ von v entspricht, v in v' = ($v_1$', ..., $v_n$') umzuwandeln, wobei $v_i$' = ($v_i$, $c_i$);
eine Binäroperationserzeugungseinheit, die konfiguriert ist, um eine neue Binäroperation zum Berechnen eines neuen Paars (p, q) für zwei Paare (w, x) und (y, z), wobei x, z $\in$ {0, 1}, unter Verwendung der Binäroperation zu erzeugen;
eine kumulative Berechnungseinheit, die konfiguriert ist, um eine Kumulation $s_i$', wobei $s_i$' eine Kumulation von $v_1$' bis $v_i$' ist, durch die neue Binäroperation für i = 1, ..., n für jede Gruppe zu berechnen; und
eine Ausgabeeinheit, die konfiguriert ist, um eine Spalte u = ($u_1$, ..., $u_n$) von Werten, die die Kumulation für jede der Gruppen angeben, aus jedem $s_i$', wobei i = 1, ..., n, zu extrahieren und das extrahierte u auszugeben,
wobei die neue Binäroperation p auf ein Operationsergebnis von w und y durch die Binäroperation setzt, wenn z = 0, p auf y setzt, wenn z = 1, und q auf eine logische Summe von x und z setzt; und
wobei die Ausgabeeinheit u = ($u_1$, ..., $u_n$) als $s_i$' = ($u_i$, $d_i$) extrahiert.

2. Kumulative Berechnungsvorrichtung gemäß Anspruch 1, wobei die Binäroperationserzeugungseinheit die neue Binäroperation erzeugt, indem sie ein Operationsergebnis von (w, x) und (y, z) durch die neue Binäroperation als (zy+(1-z)r, xORz) definiert, wobei r ein Operationsergebnis von w und y durch die Binäroperation ist und OR ein Operator ist, der die logische Summe angibt.

3. Ein kumulatives Berechnungsverfahren, das durch eine kumulative Berechnungsvorrichtung durchgeführt wird, die in Bezug auf eine Spalte v = ($v_1$, ..., $v_n$) von n Werten, die in Gruppen unterteilt sind, wobei Elemente in jeder Gruppe so angeordnet sind, dass sie aufeinanderfolgende Indizes aufweisen, eine Kumulation für jede der Gruppen durch eine assoziative Binäroperation berechnet, wobei das Verfahren **dadurch gekennzeichnet ist, dass** es Folgendes beinhaltet:

eine Wertumwandlungsprozedur zum Umwandeln von v in v' = ($v_1$', ..., $v_n$'), wobei $v_i$' = ($v_i$, $c_i$), wenn c = ($c_1$, ..., $c_n$) eine Spalte von Werten ist, in der 1 einem Kopfelement der Gruppe entspricht und 0 anderen Elementen als dem Kopfelement unter den Elementen $v_1$, ..., $v_n$ von v entspricht;
eine Binäroperationserzeugungsprozedur zum Erzeugen einer neuen Binäroperation zum Berechnen eines neuen Paars (p, q) für zwei Paare (w, x) und (y, z), wobei x, z $\in$ {0, 1}, unter Verwendung der Binäroperation;
eine kumulative Berechnungsprozedur zum Berechnen einer kumulativen $s_i$', wobei $s_i$' eine Kumulation von $v_1$' bis $v_i$' ist, durch die neue Binäroperation für i = 1, ..., n für jede Gruppe; und
eine Ausgabeprozedur zum Extrahieren einer Spalte u = ($u_1$, ..., $u_n$) von Werten, die die Kumulation für jede der Gruppen angeben, aus jedem $s_i$', wobei i = 1, ..., n, und
Ausgeben des extrahierten u,
wobei die neue Binäroperation p auf ein Operationsergebnis von w und y durch die Binäroperation setzt, wenn z = 0, p auf y setzt, wenn z = 1, und q auf eine logische Summe von x und z setzt; und
wobei die Ausgabeeinheit u = ($u_1$, ..., $u_n$) als $s_i$' = ($u_i$, $d_i$) extrahiert.

4. Ein Programm, das einen Computer veranlasst, als die kumulative Berechnungsvorrichtung gemäß Anspruch 1 oder 2 zu funktionieren.

**Revendications**

1. Un dispositif de calcul cumulatif qui, par rapport à une colonne $v = (v_1, ..., v_n)$ de n valeurs réparties en groupes dans lesquels des éléments dans chaque groupe sont agencés pour avoir des indices consécutifs, calcule un cumul pour chacun des groupes par le biais d'une opération binaire associative, le dispositif de calcul cumulatif étant **caractérisé par le fait qu'**il comprend :

   une unité de conversion de valeurs configurée pour, en formant $c = (c_1, ..., c_n,)$ comme une colonne de valeurs dans laquelle 1 correspond à un élément de tête d'un groupe et 0 correspond à des éléments autres que l'élément de tête parmi les éléments $v_1, ..., v_n$ de v, convertir v en $v' = (v_1', ...., v_n')$, où $v_i' = (v_i, c_i)$ ;
   une unité de génération d'opération binaire configurée pour générer une nouvelle opération binaire pour calculer une nouvelle paire (p, q) pour deux paires (w, x) et (y, z), où $x, z \in \{0, 1\}$, en utilisant l'opération binaire ;
   une unité de calcul cumulatif configurée pour calculer un cumul $s_i'$, où $s_i'$ est un cumul de $v_1'$ à $v_i'$, par la nouvelle opération binaire pour i = 1, ..., n pour chaque groupe ; et
   une unité de sortie configurée pour extraire une colonne $u = (u_1, ..., u_n)$ de valeurs indiquant le cumul pour ledit chacun des groupes à partir de chaque $s_i'$, où i = 1, ..., n, et délivrer en sortie le u extrait,
   dans lequel la nouvelle opération binaire définit p sur un résultat d'opération de w et y par l'opération binaire lorsque z = 0, définit p sur y lorsque z = 1, et définit q sur une somme logique de x et z ; et
   dans lequel l'unité de sortie extrait $u = (u_1, ..., u_n)$ comme $s_i' = (u_i, d_i)$.

2. Le dispositif de calcul cumulatif selon la revendication 1, dans lequel l'unité de génération d'opération binaire génère la nouvelle opération binaire en définissant un résultat opérationnel de (w, x) et (y, z) par la nouvelle opération binaire comme $(zy+(1-z)r, xOUz)$, où r est un résultat opérationnel de w et y par l'opération binaire, et OU est un opérateur indiquant la somme logique.

3. Un procédé de calcul cumulatif réalisé par un dispositif de calcul cumulatif qui, par rapport à une colonne $v = (v_1, ..., v_n)$ de n valeurs réparties en groupes dans lesquels des éléments dans chaque groupe sont agencés pour avoir des indices consécutifs, calcule un cumul pour chacun des groupes par le biais d'une opération binaire associative, le procédé étant **caractérisé par le fait qu'**il comprend :

   une procédure de conversion de valeurs consistant à convertir v en $v' = (v_1', ...., v_n')$, où $v_i' = (v_i, c_i)$, lorsque $c = (c_1, ..., c_n)$ est une colonne de valeurs dans laquelle 1 correspond à un élément de tête du groupe et 0 correspond à des éléments autres que l'élément de tête parmi les éléments $v_1, ..., v_n$ de v ;
   une procédure de génération d'opération binaire consistant à générer une nouvelle opération binaire pour calculer une nouvelle paire (p, q) pour deux paires (w, x) et (y, z), où $x, z \in \{0, 1\}$, en utilisant l'opération binaire ;
   une procédure de calcul cumulatif consistant à calculer un cumul $s_i'$, où $s_i'$ est un cumul de $v_1'$ à $v_i'$, par la nouvelle opération binaire pour i = 1, ..., n pour chaque groupe ; et
   une procédure de sortie consistant à extraire une colonne $u = (u_1, ..., u_n)$ de valeurs indiquant le cumul pour ledit chacun des groupes à partir de chaque $s_i'$, où i = 1, ..., n, et à délivrer en sortie le u extrait,
   dans lequel la nouvelle opération binaire définit p sur un résultat d'opération de w et y par l'opération binaire lorsque z = 0, définit p sur y lorsque z = 1, et définit q sur une somme logique de x et z ; et
   dans lequel l'unité de sortie extrait $u = (u_1, ..., u_n)$ comme $s_i' = (u_i, d_i)$.

4. Un programme amenant un ordinateur à fonctionner comme le dispositif de calcul cumulatif selon la revendication 1 ou la revendication 2.

Fig. 1

CUMULATIVE CALCULATION DEVICE 10

103a — RECORDING MEDIUM

105 PROCESSOR
101 INPUT DEVICE
103 EXTERNAL I/F
107
106 MEMORY DEVICE
102 DISPLAY DEVICE
104 COMMUNICATION I/F

Fig. 2

CUMULATIVE CALCULATION DEVICE 10

VALUE CONVERSION UNIT 201

BINARY OPERATION CONVERSION UNIT 202

CUMULATIVE CALCULATION UNIT 203

OUTPUT UNIT 204

STORAGE UNIT 205

Fig. 3

START

S101
CONVERT COLUMN v OF n VALUES INTO v'

S102
GENERATE NEW BINARY OPERATION
o' FROM BINARY OPERATION o

S103
CALCULATE CUMULATION s' OF v'
THROUGH NEW BINARY OPERATION o'

S104
EXTRACT COLUMN u OF VALUES FROM
CUMULATION s' AND OUTPUT COLUMN u

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3806070 A1

### Non-patent literature cited in the description

- **KOJI CHIDA** ; **KOKI HAMADA** ; **DAI IKARASHI** ; **KATSUMI TAKAHASHI**. Reconsideration of Lightweight Verifiable Three-Party Secret Function Calculation. *In CSS*, 2010

- **DAI IKARASHI** ; **KOJI CHIDA** ; **KOKI HAMADA** ; **KATSUMI TAKAHASHI**. Efficiency of Lightweight Verifiable Three-Party Secret Function Computation and Secure Database Processing Using the Same. *In SCIS*, 2011, 1-8